# EUROPÄISCHE PATENTSCHRIFT

(11) **EP 2 641 784 B1**
(45) Veröffentlichungstag und Bekanntmachung des Hinweises auf die Patenterteilung: **08.07.2015**
(21) Anmeldenummer: 13165515.1
(22) Anmeldetag: 26.04.2013
(51) Int. Cl.: B60R 21/13

(54) **Überrollschutzsystem für Kraftfahrzeuge**
Rollover protection for motor vehicles
Système de protection contre les tonneaux pour des véhicules automobiles

(43) Veröffentlichungstag der Anmeldung: 25.09.2013
(73) Patentinhaber: Metalsa Automotive GmbH, 51702 Bergneustadt (DE)
(72) Erfinder: Beki, Gürkan, 51766 Engelskirchen (DE); Helsper, Michael, 57078 Siegen (DE); Tepper, Alexander, 51643 Gummersbach (DE)
(74) Vertreter: Rebbereh, Cornelia

(56) Entgegenhaltungen:
- EP-A1- 1 127 751
- EP-A1- 2 343 221
- DE-A1- 19 750 457
- DE-A1-102004 032 069

## Beschreibung

Die Erfindung betrifft ein Überrollschutzsystem für Kraftfahrzeuge, mit
- einer am Kraftfahrzeug anordbaren Aufnahmeeinheit und
- einem zwischen einer Lagerungsposition und einer Überschlagsposition verstellbar an der Aufnahmeeinheit angeordneten Überrollkörper

Überrollschutzsysteme der eingangs genannten Art sind in vielfältigen Ausgestaltungen aus dem Stand der Technik bekannt. Sie dienen bei Kraftfahrzeugen ohne ein starres Dach dazu, um im Überschlagsfall die Fahrzeuginsassen vor Verletzungen zu schützen. Der in der Überschlagposition angeordnete Überrollkörper stellt dabei gemeinsam mit dem Windschutzscheibenrahmen einen Überlebensraum bereit.

Neben starr am Fahrzeug angeordneten Überrollbügeln, welche sich sowohl über die gesamte Fahrzeugbreite erstrecken, aber auch nur jeweils hinter einem Fahrzeugsitz angeordnet sein können, haben sich mittlerweile aktive Überrollschutzsystem der eingangs genannten Art etabliert, bei denen der Überrollkörper im Normalzustand in einer von außen nicht sichtbaren Lagerungsposition angeordnet ist und erst im Bedarfsfall, nämlich bei einem drohenden Überschlag, in die Überschlagsposition verstellt wird.

Zur schlagartigen Verlagerung der Überrollkörper werden überwiegend vorgespannte Federsysteme eingesetzt, wobei die Federenergie nach Auslösung einer Verriegelung eine Verstellung in die Überschlagsposition bewirkt. Einen alternativen Antrieb stellen sogenannte pyrotechnische Antriebseinheiten dar, bei denen die sich mit Auslösung der pyrotechnischen Einheit, beispielsweise eines Gasgenerators ergebende schlagartige Druckerhöhung dazu genutzt wird, um den Überrollkörper in die Überschlagsposition zu überführen.

Am Fahrzeug ist das eingebaute Überrollschutzsystem durch eine - bezogen auf die Einbaulage des Überrollschutzsystems am Kraftfahrzeug - oberhalb des Überrollkörpers angeordnete Überrollschutzsystemabdeckung verkleidet, welche an die Fahrzeugkontur angepasst ist, um ein optisch ansprechendes Äußeres zu erzielen. Um die Sicherungsfunktionen des Überrollschutzsystems zu gewährleisten, ist es dabei erforderlich, dass die Überrollschutzsystemabdeckung derart ausgebildet ist, dass nach einer Aktivierung des Überrollschutzsystems der Überrollkörper unter Berücksichtigung des hierzu erforderlichen Durchbruchs durch die Überrollsystemabdeckung störungsfrei aus seiner Lagerungsposition in die Überschlagsposition gelangt.

Die Überrollschutzsystemabdeckungen können hierzu unterschiedlich ausgebildet sein. So können diese beispielsweise mit durch Klappen oder Kappen verdeckte Durchtrittsöffnungen aufweisen oder aber mit Sollbruchstellen im Bereich der Überrollkörper ausgestattet sein. Im Falle einer Aktivierung des Überrollschutzsystems ist dabei ferner von besonderer Bedeutung, dass die Überrollschutzsystemabdeckung in dem das Überrollschutzsystem umgebenden Bereich in seiner Position verbleibt. Eine sich verlagernde Überrollschutzsystemabdeckung kann zum einen den Durchtritt des Überrollkörpers durch die Überrollschutzsystemabdeckung behindern und so eine Verstellung bis in die Überschlagsposition gefährden. Darüber hinaus kann eine verlagerte Überrollschutzsystemabdeckung zur Verletzung bei den Fahrzeuginsassen führen.

Die EP 2 343221 offenbart ein Überrollschutzsystem gemäß dem Oberbegriff des Anspruchs 1.

Hiervon ausgehend liegt der Erfindung die Aufgabe zugrunde, ein Überrollschutzsystem bereitzustellen, welches eine zuverlässige Arretierung einer Überrollschutzsystemabdeckung ermöglicht, um eine Verlagerung des Überrollkörpers aus der Lagerungsposition in die Überschlagsposition zu gewährleisten.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben.

Kennzeichnend für das erfindungsgemäße Überrollschutzsystem ist, dass die Aufnahmeeinheit eine Befestigungsvorrichtung zur lagesicheren Anordnung einer Überrollschutzsystemabdeckung an der Aufnahmeeinheit aufweist. Die Befestigungsvorrichtung ist dabei derart ausgebildet, dass sie im Falle einer Aktivierung des Überrollschutzsystems die Überrollschutzsystemabdeckung derart im den Überrollkörper umgebenden Bereich fixiert, dass diese auch bei einem Durchbruch des Überrollkörpers durch die Überrollschutzsystemabdeckung im Bereich unmittelbar - bezogen auf die Einbaulage - oberhalb des Überrollkörpers in ihrer Position verbleibt.

Die erfindungsgemäße Ausgestaltung des Überrollschutzsystems gewährleistet, dass der Überrollkörper zuverlässig aus der Lagerungsposition in die Überschlagsposition gelangt, ohne dass die Bewegung durch eine sich möglicherweise verlagernde Überrollschutzsystemabdeckung behindert oder vollständig unterbunden wird. Darüber hinaus wird durch die lagesichere Anordnung der Überrollschutzsystemabdeckung an der Aufnahmeeinheit vermieden, dass diese derart verlagert wird, dass diese mit möglicherweise scharfkantigen Bereichen in den von den Fahrzeuginsassen zugänglichen Bereich gelangt. Aufgrund der Anordnungsmöglichkeit der Überrollschutzsystemabdeckung an der Aufnahmeeinheit kann zudem auf weitere Befestigungsmittel zur Anordnung der Abdeckung am Fahrzeug verzichtet werden, was eine insgesamt kostengünstigere Herstellung bei gleichzeitig zuverlässiger Ausrichtung der Überrollschutzsystemabdeckung gegenüber dem Überrollschutzsystem ermöglicht.

Die Ausgestaltung der Befestigungsvorrichtung kann grundsätzlich in beliebiger Weise erfolgen. So kann die Aufnahmeeinheit beispielsweise mit Verschraubungspunkten ausgestattet sein, an welchen die Überrollschutzsystemabdeckung befestigt werden kann. Nach einer besonders vorteilhaften Ausgestaltung der Erfindung ist jedoch vorgesehen, dass die Befestigungsvorrichtung zur formschlüssigen Anordnung der Überrollschutzsystemabdeckung ausgebildet ist. Besonders bevorzugt ist die formschlüssige Verbindung dabei derart ausgebildet, dass der Formschluss in Verstellrichtung des Überrollkörpers zwischen der Aufnahmeeinheit und der Überrollschutzsystemabdeckung besteht. Diese Ausgestaltung der Erfindung gewährleistet in besonders zuverlässiger Weise eine Positionssicherheit der Überrollschutzsystemabdeckung im Falle eines Durchbruchs des Überrollkörpers durch die Abdeckung. Auf ergänzende Lagesicherungsmittel kann, insbesondere bei der in besonders vorteilhafter Weise vorgesehenen formschlüssigen Verbindung in Verstellrichtung des Überrollkörpers, verzichtet werden. Die bei dem Durchbruch der Überrollschutzsystemabdeckung auftretenden Kräfte werden zuverlässig über den bestehenden Formschluss mit der Aufnahmeeinheit übertragen, sodass deren Verlagerung wirksam vermieden werden kann.

Die konkrete Ausgestaltung einer formschlüssig wirkenden Befestigungsvorrichtung kann ebenfalls in beliebiger Weise erfolgen. So können beispielsweise Bolzen an der Überrollschutzsystemabdeckung und/oder der Aufnahmeeinheit angeordnet sein, welche mit entsprechenden Öffnungen an der jeweils anderen Baueinheit im montierten Zustand in Eingriff befindlich sind. Nach einer vorteilhaften Ausgestaltung der Erfindung ist jedoch vorgesehen, dass die Befestigungsvorrichtung durch einen im Wesentlichen senkrecht zur Längsachse des Überrollkörpers vorstehenden Vorsprung gebildet ist. Die Verwendung eines Vorsprungs, bspw. in Form eines Steges, lässt sich auf einfache Weise ausgestalten und bietet die Möglichkeit einer flächigen Anlage einer Gegenfläche der Überrollschutzsystemabdeckung. Der Vorsprung bietet die Möglichkeit, bspw. eine korrespondierende, an der am Überrollschutzsystem angeordneten Lasche in einfacher Weise in der montierten Lage mit dem Vorsprung in Eingriff zu bringen. Über den Überdeckungsgrad des Vorsprungs mit einer beispielsweise verwendeten Lasche kann somit eine zuverlässige Lagesicherung der Überrollschutzsystemabdeckung erreicht werden. Eine im Wesentlichen senkrecht zur Längsachse erfolgende Orientierung des Vorsprungs bzw. Stegs weist dabei den Vorteil auf, dass im Fall einer flächigen Anlage einer an der Überrollschutzsystemabdeckung angeordneten Lasche die Kontaktfläche im Wesentlichen senkrecht zur Längsachse des Überrollkörpers verläuft, welche im Wesentlichen der Verstellrichtung des Überrollkörpers und damit der Richtung der maximalen Kraftkomponente im Falle eines Durchbruchs durch die Überrollschutzsystemabdeckung entspricht.

Die Anzahl sowie die Anordnung der vorteilhafter Weise vorgesehenen Vorsprünge ist frei wählbar und erfolgt vorzugsweise unter Berücksichtigung der zu erwartenden Belastungen. Nach einer besonders vorteilhaften Ausgestaltung der Erfindung ist jedoch vorgesehen, dass die Befestigungsvorrichtung zwei in Längsachsenrichtung des Überrollkörpers betrachtet im Abstand voneinander angeordnete Vorsprünge aufweist. Durch diese Ausgestaltung wird eine besonders zuverlässige Lagesicherung der Überrollschutzsystemabdeckung erreicht, wobei auch eine Verlagerung der Überrollschutzsystemabdeckung entgegen der Verstellrichtung des Überrollkörpers aus der Lagerungsposition in die Überschlagsposition verhindert wird. Hierdurch wird eine besonders zuverlässige Lagesicherung der Abdeckung gegenüber dem Überrollkörper erreicht, sodass bei einer Aktivierung des Überrollkörpers besonders zuverlässig gewährleistet ist, dass der Abstand von einer Unterseite der Überrollschutzsystemabdeckung bis zur Oberseite des Überrollkörpers konstant ist. Darüber hinaus erlaubt eine entsprechende Ausgestaltung der Befestigungsvorrichtung eine besonders einfache Montage der Überrollschutzsystemabdeckung, welche mit entsprechend ausgebildeten Montagebereichen in die zwischen den Vorsprüngen gebildete Nut einschiebbar ist.

Nach einer weiteren Ausgestaltung der Erfindung ist vorgesehen, dass die Befestigungsvorrichtung mindestens zwei im Abstand voneinander über den Umfang der Aufnahmeeinheit verteilt angeordnete Vorsprünge aufweist. Gemäß dieser Ausgestaltung der Erfindung kann durch zumindest einen weiteren, am Umfang der Aufnahmeeinheit angeordneten Vorsprung, wobei die Aufnahmeeinheit den Überrollkörper in der Regel umgibt, neben einer in Längsachsenrichtung des Überrollkörpers betrachteten Lagesicherung der Überrollschutzsystemabdeckung auch einer quer hierzu gerichteten Verlagerung in besonders wirksamer Weise vorgebeugt werden. Zudem kann durch die Verwendung weiterer Vorsprünge am Umfang der Aufnahmeeinheit deren Größe reduziert werden, nachdem diese insgesamt eine gemeinsame Kontaktfläche im Falle einer Verlagerung des Überrollkörpers bilden, welche einer Verlagerung der Überrollschutzsystemabdeckung entgegen wirkt. Besonders vorteilhafter Weise ist dabei vorgesehen, dass die Vorsprünge an einander gegenüberliegenden Seiten der Aufnahmeeinheit angeordnet sind.

Die Anordnung der Überrollschutzsystemabdeckung an der Befestigungsvorrichtung kann, wie bereits zuvor dargelegt, grundsätzlich in beliebiger Weise erfolgen. Nach einer vorteilhaften Weiterbildung der Erfindung ist jedoch vorgesehen, dass die Befestigungsvorrichtung zur kraftschlüssigen Anordnung der Überrollschutzsystemabdeckung ausgebildet ist. Die kraftschlüssige Verbindung kann dabei alternativ oder zusätzlich zu weiteren Befestigungsmethoden verwendet werden. Der Kraftschluss selbst kann ebenfalls in beliebiger Weise erzeugt werden, bspw. aufgrund einer Schraubverbindung. Durch diese Ausgestaltung der Erfindung kann eine besonders zuverlässige Anordnung gewährleistet werden.

Die Anordnung der Befestigungsvorrichtung kann grundsätzlich unmittelbar an der Aufnahmeeinheit erfolgen, bei der es sich in der Regel um ein Hohlprofil handelt innerhalb dessen der Überrollkörper verlagerbar geführt ist. Nach einer besonders vorteilhaften Ausgestaltung der Erfindung ist jedoch vorgesehen, dass die Befestigungsvorrichtung an einem mit der Aufnahmeeinheit verbindbaren Anschlusselement angeordnet ist. Gemäß dieser Ausgestaltung der Erfindung ist ein Anschlusselement vorgesehen, welches einerseits mit den Befestigungsvorrichtungen zur Lagesicherung der Überrollschutzsystemabdeckung ausgebildet ist und andererseits dergestalt ist, dass es lagesicher mit der Aufnahmeeinheit verbindbar ist. So kann das Anschlusselement beispielsweise als auf die Aufnahmeeinheit aufsteckbarer Ringkörper gebildet sein, welcher in beliebiger Weise lagesicher mit der Aufnahmeeinheit verbindbar ist. So kann das Anschlusselement beispielsweise klemmend mit der Aufnahmeeinheit verbindbar sein oder aber ist mit der Aufnahmeeinheit verschraubbar.

Diese Ausgestaltung der Erfindung ermöglicht es, insbesondere herkömmliche, einfach ausgestaltete Aufnahmeeinheiten zu verwenden, was insbesondere die Herstellung besonders kostengünstiger Überrollschutzsysteme ermöglicht. Die Befestigungsvorrichtung ist an einem einfach auszugestaltenden Anschlusselement ausgebildet, welches entsprechend der verwendeten Aufnahmeeinheiten unterschiedlich ausgebildet sein kann. Diese Ausgestaltung der Erfindung ermöglicht somit die Verwendung bereits bewährter und standardisierter Aufnahmeeinheiten.

Wie bereits zuvor dargelegt, ist die Anordnung des vorzugweise vorgesehenen Anschlusselements an der Aufnahmeeinheit grundsätzlich frei wählbar. Nach einer besonders vorteilhaften Ausgestaltung der Erfindung ist jedoch vorgesehen, dass das Anschlusselement in die Aufnahmeeinheit einsteckbar ist. Insbesondere weist das Anschlusselement in die Hohlräume einer als doppelwandiges Hohlkammerprofil ausgebildeten Aufnahmeeinheit einsteckbare Verstärkungselement auf. Gemäß dieser bevorzugten Ausgestaltung der Erfindung weist die Aufnahmeeinheit zumindest in einem Bereich ein doppelwandiges Hohlprofil auf. In die aufgrund der Doppelwandigkeit gebildeten Kammern sind die entsprechend ausgebildeten Verstärkungselemente des Anschlusselements einsteckbar. Das Anschlusselement erfüllt dann nicht nur die Funktion der Bereitstellung geeigneter Befestigungsvorrichtungen, sondern ermöglicht es überdies, die Aufnahmeeinheit im Bereich ihres im Überschlagsfall besonders belasteten Endbereichs durch die Verstärkungselemente zu verstärken, wobei diese unter Anderem eine Abstützung der Innenflächen der Hohlkammern bewirken.

Das Anschlusselement kann dabei an das Hohlkammerprofil des Anschlusselements angepasst sein. Insbesondere kann das Anschlusselement derart ausgebildet sein, dass im montierten Zustand sämtliche Hohlräume mit Verstärkungselementen versehen sind.

Besonders bevorzugt ist dabei vorgesehen, dass das Anschlusselement ringförmig ausgebildet ist, wodurch eine besonders zuverlässige Lagesicherung des Anschlusselements an der Aufnahmeeinheit gewährleistet wird. Überdies kann eine Verstärkung gleichmäßig über den Umfang der Aufnahmeeinheit verteilt werden.

Ein Ausführungsbeispiel der Erfindung wird nachstehend mit Bezug auf die Zeichnung erläutert. In den Zeichnungen zeigen:
- Fig. 1: Eine perspektivische Ansicht eines Überrollschutzsystems;
- Fig. 2: eine perspektivische Ansicht einer Aufnahmeeinheit des Überrollschutzsystems von Figur 1 und
- Fig. 3: eine perspektivische Ansicht des Überrollschutzsystems von Figur 1 mit darüber angeordneter Überrollschutzsystemabdeckung.

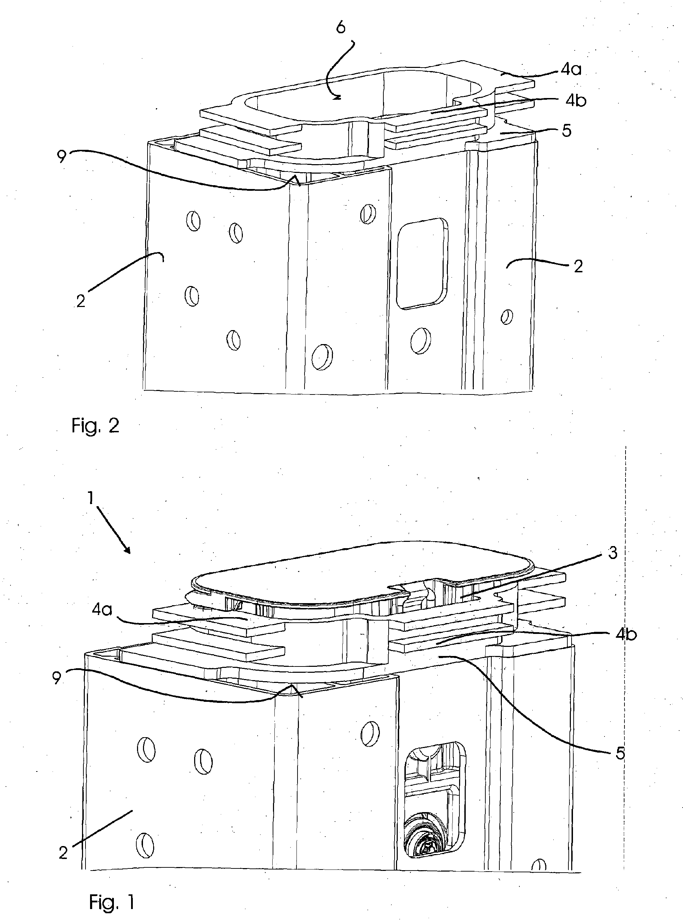

Ein in Fig. 1 dargestelltes Ausführungsbeispiel eines Überrollschutzsystems 1 weist eine Aufnahmeeinheit 2 sowie einen in Längsachsenrichtung verschiebbaren Überrollkörper 3 auf. Die Aufnahmeeinheit 2 ermöglicht die Anordnung des Überrollschutzsystems 1 in einem hier nicht dargestellten Kraftfahrzeug und gewährleistet über dessen Anbindung an der Fahrzeugkarosserie eine zuverlässige Kraftübertragung der im Überschlagsfall auf den Überrollköper 3 wirkenden Kräfte in das Fahrzeug.

Wie insbesondere in Fig. 2 ersichtlich, ist die Aufnahmeeinheit 2 dabei als doppelwandiges Hohlkammerprofil ausgebildet, wobei eine zentrale Öffnung der Aufnahmeeinheit 2 den Überrollkörper 3 koaxial umgibt. Durch das doppelwandige Profil weist die Aufnahmeeinheit 2 voneinander abgegrenzte Hohlräume 9 auf. Diese dienen teilweise zur Aufnahme von sich in Längsachsenrichtung des Überrollkörpers 3 erstreckender, hier nicht dargestellte Verstärkungselemente eines Anschlusselements 5, welches in ein - bezogen auf die Einbaulage - oberes Ende der Aufnahmeeinheit 2 eingesteckt ist. Die Verstärkungselemente der Aufnahmeeinheit 5 bewirken eine Abstützung der einander zugewandten Innenwände der verstärkten Hohlräume 9, wodurch insgesamt eine Verstärkung der Aufnahmeeinheit 2 im im Überschlagsfall besonders belasteten oberen Bereich bewirkt wird.

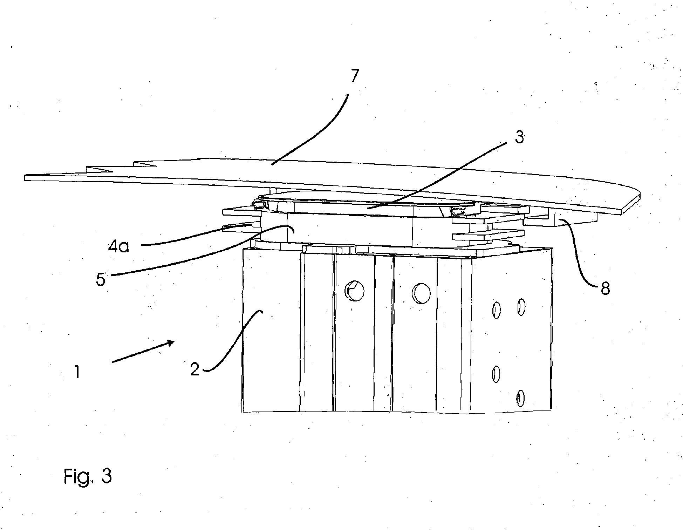

Darüber hinaus weist die Aufnahmeeinheit über den Umfang verteilt nach Außen vorstehende stegartige Vorsprünge 4a, 4b auf, welche die Anordnung einer Überrollschutzsystemabdeckung ₇ an der Aufnahmeeinheit 2 ermöglichen. Hierzu weist die Überrollschutzsystemabdeckung ₇ Befestigungslaschen 8 auf, die - bezogen auf die Einbaulage - nach unten von der Überrollschutzsystemabdeckung 7 vorstehen und in eine zwischen den in Längsachsenrichtung des Überrollkörpers 3 im Abstand voneinander angeordneten Vorsprüngen 4a, 4b gebildete Nut einschiebbar sind (vgl. Fig. 3).

Die Anordnung der Laschen 8 in den Vorsprüngen 4a, 4b gewährleistet eine zuverlässige Lagesicherung der Überrollschutzsystemabdeckung 7 gegenüber der Aufnahmeeinheit 2 und dem Überrollkörper 3, welcher im Gefahrenfall zuverlässig aus der in den Figuren 1 und 3 dargestellten Ruhelage in eine hier nicht dargestellte Überschlagsposition verlagerbar ist, wobei der Überrollkörper 3 dabei durch eine entsprechend ausgebildeten Öffnung 6 der Aufnahmeeinheit 2 bewegt wird.

## Patentansprüche

1. Überrollschutzsystem für Kraftfahrzeuge, mit
- einer Überrollschutzsystemabdeckung (7)
- einer am Kraftfahrzeug anordbaren Aufnahmeeinheit (2) und
- einem zwischen einer Lagerungsposition und einer Überschlagsposition verstellbar an der Aufnahmeeinheit angeordneten Überrollkörper (3), **dadurch gekennzeichnet, dass** die Aufnahmeeinheit (2) eine Befestigungsvorrichtung (4a, 4b) zur lagesicheren Anordnung der Überrollschutzsystemabdeckung (7) an der Aufnahmeeinheit aufweist, die im Falle einer Aktivierung des Überrollschutzsystems (1) die Überrollschutzsystemabdeckung (7) derart im den Überrollkörper umgehenden Bereich fixiert, dass diese auch bei einem Durchbruch des Überrollkörpers (3) durch die Überrollschutzystemabdeckung (7) im Bereich unmittelbar bezogen auf die Einbaulage oberhalb des Überrollkörpers (3) in ihrer Position verbleibt.

2. Überrollschutzsystem nach Anspruch 1, **dadurch gekennzeichnet, dass** die Befestigungsvorrichtung (4a, 4b) zur formschlüssigen Anordnung der Überrollschutzsystemabdeckung (7) ausgebildet ist.

3. Überrollschutzsystem nach Anspruch 1 und 2, **dadurch gekennzeichnet, dass** die Befestigungsvorrichtung einen im Wesentlichen senkrecht zur Längsachse des Überrollkörpers (3) vorstehenden Vorsprung (4a, 4b) aufweist.

4. Überrollschutzsystem nach einem der vorhergehenden Ansprüche, **dadurch gekennzeichnet, dass** die Befestigungsvorrichtung zwei in Längsachsenrichtung des Überrollkörpers (3) betrachtet im Abstand voneinander angeordnete Vorsprünge (4a, 4b) aufweist.

5. Überrollschutzsystem nach einem der vorhergehenden Ansprüche, **dadurch gekennzeichnet, dass** die Befestigungsvorrichtung mindestens zwei im Abstand voneinander über den Umfang der Aufnahmeeinheit (2) verteilt angeordnete Vorsprünge (4a, 4b) aufweist.

6. Überrollschutzsystem nach einem der vorhergehenden Ansprüche, **dadurch gekennzeichnet, dass** die Vorsprünge (4a, 4b) an einander gegenüberliegenden Seiten der Aufnahmeeinheit (2) angeordnet sind.

7. Überrollschutzsystem nach einem der vorhergehenden Ansprüche, **dadurch gekennzeichnet, dass** die Befestigungsvorrichtung (4a, 4b) zur kraftschlüssigen Anordnung der Überrollschutzsystemabdeckung (7) ausgebildet ist.

8. Überrollschutzsystem nach einem der vorhergehenden Ansprüche, **dadurch gekennzeichnet, dass** die Befestigungsvorrichtung (4a, 4b) an einem mit der Aufnahmeeinheit (2) verbindbaren Anschlusselement (5) angeordnet ist.

9. Überrollschutzsystem nach Anspruch 8, **dadurch gekennzeichnet, dass** das Anschlusselement (5) in die Aufnahmeeinheit (2) einsteckbar ist, insbesondere in die Hohlräume (9) einer als doppelwandiges Hohlkammerprofil (2) ausgebildeten Aufnahmeeinheit einsteckbare Verstärkungselemente aufweist.

10. Überrollschutzsystem nach Anspruch 8 oder 9, **dadurch gekennzeichnet, dass** Anschlusselement (5) ringförmig ausgebildet ist.

## Claims

1. Rollover protection system for motor vehicles, having
- a rollover protection system covering (7)
- a receiving unit (2) arrangeable on the motor vehicle and
- a rollover body (3) arranged adjustably on the receiving unit between a storage position and a rollover position, **characterised in that** the receiving unit (2) has a fastening device (4a, 4b) for positionally secure arrangement of the rollover protection system covering (7) on the receiving unit, which in the event of activation of the rollover protection system (1) fixes the rollover protection system covering (7) in such a manner in the region surrounding the rollover body that said covering remains in its position in the region directly above the rollover body (3), in relation to the installed position, even if the rollover body (3) breaches the rollover protection system covering (7).

2. Rollover protection system according to Claim 1, **characterised in that** the fastening device (4a, 4b) is configured for the form-fitting arrangement of the rollover protection system covering (7).

3. Rollover protection system according to Claim 1 and 2, **characterised in that** the fastening device has a projection (4a, 4b) protruding substantially perpendicularly to the longitudinal axis of the rollover body (3).

4. Rollover protection system according to one of the preceding claims, **characterised in that** the fastening device has two projections (4a, 4b) arranged at a distance from one another viewed in the direction of the longitudinal axis of the rollover body (3).

5. Rollover protection system according to one of the preceding claims, **characterised in that** the fastening device has at least two projections (4a, 4b) arranged at a distance from one another distributed over the periphery of the receiving unit (2).

6. Rollover protection system according to one of the preceding claims, **characterised in that** the projections (4a, 4b) are arranged at mutually opposite sides of the receiving unit (2).

7. Rollover protection system according to one of the preceding claims, **characterised in that** the fastening device (4a, 4b) is configured for the force-fitting arrangement of the rollover protection system covering (7).

8. Rollover protection system according to one of the preceding claims, **characterised in that** the fastening device (4a, 4b) is arranged on a connection element (5) connectable to the receiving unit (2).

9. Rollover protection system according to Claim 8, **characterised in that** the connection element (5) is insertable into the receiving unit (2), in particular has reinforcing elements insertable into the cavities (9) of a receiving unit configured as a double-walled hollow-chamber profile (2).

10. Rollover protection system according to Claim 8 or 9, **characterised in that** connection element (5) is of annular configuration.

## Revendications

1. Système de protection contre le retournement destiné à des véhicules automobiles, comprenant :
- un recouvrement de système de protection contre le retournement (7),
- une unité de réception (2) pouvant être disposée au niveau du véhicule automobile et
- un corps de sécurité (3) disposé au niveau de l'unité de réception de manière à pouvoir être déplacé entre une position de stockage et une position de renversement, **caractérisé en ce que** l'unité de réception (2) présente un dispositif de fixation (4a, 4b) servant à agencer en position sûre le recouvrement de système de protection contre le retournement (7) au niveau de l'unité de réception, lequel dispositif de fixation bloque, dans le cas d'une activation du système de protection contre le retournement (1), le recouvrement de système de protection contre le retournement (7) dans la zone contournant le corps de sécurité de telle manière que ledit recouvrement reste dans sa position à proximité immédiate par rapport à l'emplacement de montage au-dessus du corps de sécurité (3) également si le corps de sécurité (3) traverse le recouvrement de système de protection contre le retournement (7).

2. Système de protection contre le retournement selon la revendication 1, **caractérisé en ce que** le dispositif de fixation (4a, 4b) est réalisé aux fins de l'agencement par complémentaire de forme du recouvrement de système de protection contre le retournement (7).

3. Système de protection contre le retournement selon la revendication 1 et 2, **caractérisé en ce que** le dispositif de fixation présente une partie faisant saillie (4a, 4b) faisant saillie essentiellement de manière perpendiculaire par rapport à l'axe longitudinal du corps de sécurité (3).

4. Système de protection contre le retournement selon l'une quelconque des revendications précédentes, **caractérisé en ce que** le dispositif de fixation présente deux parties faisant saillie (4a, 4b) disposées à distance l'une de l'autre observées dans la direction de l'axe longitudinal du corps de sécurité (3) .

5. Système de protection contre le retournement selon l'une quelconque des revendications précédentes, **caractérisé en ce que** le dispositif de fixation présente au moins deux parties faisant saillie (4a, 4b) disposées de manière répartie à distance l'une de l'autre sur la périphérie de l'unité de réception (2).

6. Système de protection contre le retournement selon l'une quelconque des revendications précédentes, **caractérisé en ce que** les parties faisant saillie (4a, 4b) sont disposées au niveau de côtés se faisant face de l'unité de réception (2).

7. Système de protection contre le retournement selon l'une quelconque des revendications précédentes, **caractérisé en ce que** le dispositif de fixation (4a, 4b) est réalisé aux fins de l'agencement à force du recouvrement de système de protection contre le retournement (7).

8. Système de protection contre le retournement selon l'une quelconque des revendications précédentes, **caractérisé en ce que** le dispositif de fixation (4a, 4b) est disposé au niveau d'un élément de raccordement(5) pouvant être relié à l'unité de réception (2).

9. Système de protection contre le retournement selon la revendication 8, **caractérisé en ce que** l'élément de raccordement (5) peut être emboîté dans l'unité de réception (2), présente en particulier des éléments de renforcement pouvant être emboîtés dans les cavités (9) d'une unité de réception réalisée sous la forme d'un profil à chambre creuse (2) à double paroi.

10. Système de protection contre le retournement selon la revendication 8 ou 9, **caractérisé en ce que** l'élément de raccordement (5) est réalisé de manière à présenter une forme annulaire.
